# EUROPEAN PATENT APPLICATION

(11) **EP 4 604 482 A1**
(43) Date of publication of application: **20.08.2025**
(21) Application number: 25155234.5
(22) Date of filing: 31.01.2025
(51) Int. Cl.: H04L 45/00, H04L 41/40, H04W 40/10, H04L 45/64

(54) **INFORMATION PROCESSING METHOD, INFORMATION PROCESSING APPARATUS, AND STORAGE MEDIUM**

(30) Priority: 15.02.2024 JP 2024021222
(71) Applicant: TOYOTA JIDOSHA KABUSHIKI KAISHA, Aichi-ken, 471-8571 (JP); KDDI Corporation, Tokyo 163-8003 (JP)
(72) Inventor: SHAO, Xiao, Toyota-shi, Aichi-ken 471-8571 (JP); OMI, Satoshi, Toyota-shi, Aichi-ken 471-8571 (JP); ITO, Akira, Toyota-shi, Aichi-ken 471-8571 (JP); YAMAMOTO, Kenichi, Tokyo, 163-8003 (JP); SAKAI, Takurou, Tokyo, 163-8003 (JP)
(74) Representative: Cabinet Beau de Loménie

(57) **Abstract**

ABSTRACT OF THE DISCLOSURE

An information processing method comprises a first network function (NF) (2,7) within a core network executing: in a case where the first NF (2,7) receives a request regarding route setting in accordance with energy related to communication within the core network from a second NF (1), acquiring energy related information regarding the energy related to the communication; and determining whether to change or not a communication route set for predetermined user equipment based at least on the energy related information.

## Description

### CROSS REFERENCE TO THE RELATED APPLICATION

This application claims the benefit of Japanese Patent Application No. 2024-021222, filed on February 15, 2024, which is hereby incorporated by reference herein in its entirety and to which the person of the art can refer when considering the present disclosure.

### BACKGROUND

### Technical Field

The present disclosure relates to a communication network.

### Description of the Related Art

A system that changes a transfer route of user data as appropriate so as to obtain appropriate communication quality is disclosed in a 3rd generation partnership project (3GPP) (R) communication system (Japanese Patent Laid-Open No. 2020-191497).

### SUMMARY

The present disclosure is directed to changing a route of user data based on requirements regarding energy consumption related to communication.

The present disclosure in its one aspect provides an information processing method comprising: a first network function,NF, within a core network executing: in a case where the first NF receives a request regarding route setting in accordance with energy related to communication within the core network from a second NF, acquiring energy related information regarding the energy related to the communication; and determining whether to change or not a communication route set for a predetermined user equipment based at least on the energy related information.

The present disclosure in its another aspect provides an information processing apparatus that operates as a first network function, NF, within a core network, the information processing apparatus comprising: a controller configured to execute: in a case where the controller receives a request regarding route setting in accordance with energy related to communication within the core network from a second NF, acquiring energy related information regarding the energy related to the communication; and determining whether to change or not a communication route set for predetermined user equipment based at least on the energy related information.

Further, other aspects include a program for causing a computer to execute the above-described information processing method, or a computer-readable storage medium non-transitorily storing the program.

According to the present disclosure, it is possible to change a route of user data based on requirements regarding energy consumption related to communication.

### BRIEF DESCRIPTION OF THE DRAWINGS

Fig. 1 is a diagram illustrating one example of an architecture of a 5th generation mobile communication system;
Fig. 2 is a diagram for explaining route change processing of user data in the communication system;
Fig. 3 is a diagram illustrating one example of a hardware configuration of an information processing apparatus operable as a network function;
Fig. 4 is a diagram illustrating one example of a functional configuration of an SMF 7;
Fig. 5 is a diagram illustrating one example of a functional configuration of an NWDAF 3;
Fig. 6 is a first flowchart of processing to be performed by the SMF 7;
Fig. 7 is a second flowchart of processing to be performed by the SMF 7;
Fig. 8 is a diagram indicating one example of a sequence of route change processing of the user data in a first embodiment;
Fig. 9 is a diagram indicating one example of the sequence of the route change processing of the user data in the first embodiment;
Fig. 10 is a diagram indicating one example of a sequence of route change processing of user data in a second embodiment; and
Fig. 11 is a diagram indicating one example of a sequence of route change processing of user data in a third embodiment.

### DESCRIPTION OF THE EMBODIMENTS

In a wireless network including a 5G system, there is a technique of dynamically changing a transfer route of user data within the network to secure communication quality at user equipment.

For example, in the 5G system, a policy control function (hereinafter, a PCF) is capable of changing a route that connects user equipment to a data network (DN) via a user plane function (UPF) based on a predetermined quality of service (QoS) policy.

For example, in a case where the QoS policy indicates that communication of an application to be utilized by the user equipment requires throughput equal to or higher than a certain level, the PCF can detect that congestion has occurred on a route of user data and switch the route to another route that is not congested based on the QoS policy.

In this manner, the PCF can reset the transfer route of the user data as appropriate based on quality, or the like, of communication to be performed by the user equipment. However, the existing technique does not take into account change of the transfer route of the user data based on energy requirements.

For example, the existing technique cannot satisfy demands to utilize a route that satisfies requirements such as energy consumption, energy efficiency, a renewable energy ratio, and the like, when the user equipment performs communication. An information processing method according to the present disclosure solves this problem.

An information processing method according to one aspect of the present disclosure executes, in a case where a first network function (NF) within a core network receives, from a second NF, a request regarding route setting in accordance with energy related to communication within the core network, acquiring energy related information regarding the energy related to the communication, and determining change of a communication route set for predetermined user equipment based at least on the energy related information.

The first NF is a network function for determining whether or not to change the communication route set for the predetermined user equipment based on the information regarding the energy and is typically a policy control function (PCF), a session management function (SMF), or the like.

The first NF receives the request regarding the route setting from the second NF. The request regarding the route setting is, for example, a request for changing a route of user data to a more appropriate route in accordance with the energy related to the communication within the core network.

The second NF can be, for example, a network function (application function, hereinafter, an AF) supporting an external application. The external application may be an application that provides communication control in which energy requirements are taken into account.

The first NF acquires the information regarding the energy related to the communication (hereinafter, the energy related information) and determines whether or not to change the communication route set for the predetermined user equipment based at least on the energy related information.

For example, the first NF may acquire information regarding energy to be consumed within the network (energy related information) from a network data analytics function (NWDAF) and determine whether or not it is necessary to change the communication route based on this information. Thus, the energy related information may be added to a communication interface with the NWDAF.

The first NF can, for example, determine to change the communication route in a case where the energy related information satisfies predetermined requirements.

Here, the predetermined requirements are requirements regarding the energy to be consumed in the communication and are requirements that should be satisfied when the user data is transmitted/received. In the following description, the predetermined requirements will be referred to as "energy requirements". The energy requirements may be, for example, requirements that designate an amount of energy to be consumed in equipment or functions through which the user data goes, energy efficiency, a renewable energy ratio, thresholds thereof, and the like. The energy requirements may be held by the first NF in advance, held by other NFs located within the network or may be received from the second NF along with the request regarding the route setting.

The first NF determines whether or not it is necessary to change the communication route set for the predetermined user equipment, for example, by comparing the energy related information with the energy requirements. For example, in a case where a communication route that does not satisfy the energy requirements is set, the first NF determines that it is necessary to change the communication route.

Note that the first NF may execute processing of actually changing the communication route for the user equipment.

Further, in a case where the first NF determines not to change the communication route, the first NF may notify the second NF of a reason for the determination

For example, there is a case where it is not appropriate to change the communication route, such as a case where a communication route that satisfies the energy requirements does not exist. In such a case, the first NF preferably notifies the second NF of the reason.

Further, the first NF may transmit, to the second NF, a confirmation as to whether or not it is possible to change the communication route in a case where the first NF determines to change the communication route and may change the communication route in a case where the first NF receives a response indicating permission of change of the communication route.

By the confirmation being transmitted to the second NF before the communication route is changed, the second NF can execute necessary processing before route change occurs.

Further, in a case where the first NF changes the communication route, the first NF may transmit, to the second NF, a result of the change of the communication route.

The information processing method according to the present disclosure may be executed by a computer within the core network or may be executed by a computer outside the core network. The core network may be, for example, one of a 5th generation (5G) mobile core network, a 4th generation (4G) mobile core network and 6th generation (6G) or later mobile core network.

Specific embodiments of the present disclosure will be described below based on the drawings. Hardware configurations, module configurations, functional configurations, and the like, described in the respective embodiments are not intended to limit the technical scope of the disclosure thereto unless otherwise described.

### (First Embodiment)

### [Outline of Communication System]

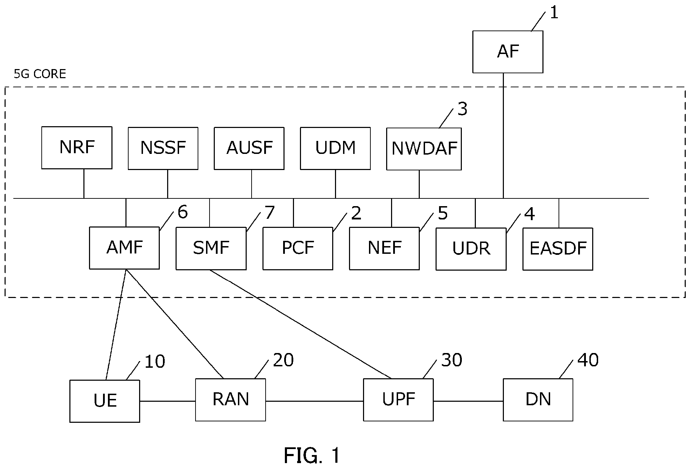

Fig. 1 is a diagram illustrating one example of an architecture of a 5th generation mobile communication system (5G). The 5G network includes a 5G core network and a radio access network (RAN). User equipment (UE) 10, a data network (DN) 40 and an application function (AF) 1 are connected to the 5G network. The UE 10 is equipment of a user (subscriber). The radio access network (RAN) 20 is a radio access network to the 5G core network. The RAN 20 includes a base station (gNB). Note that while Fig. 1 illustrates the radio access network, an access network (AN) other than the radio access network may be used for connection to the 5G core network.

Fig. 1 illustrates some of components included in the 5G core network. Further, in Fig. 1, components according to a first embodiment are denoted by reference numerals. In the 5G, software that implements network functions is separated from hardware on which the software is to be executed using a hardware abstraction technique. This makes it possible for software of various network functions to operate on a common hardware resource without depending on configurations for each hardware product. Fig. 1 illustrates network functions (NFs) included in the 5G core network. Each of a plurality of NFs included in the 5G core network is implemented by one or more computers (information processing apparatuses) executing a program. However, a single computer may implement any two or more NFs.

A user plane function (UPF) 30 performs routing of user packets, transfer, packet inspection and QoS processing. The user packets are packets of a user plane to be transmitted and received by the UE 10.

An access and mobility management function (AMF) 6 accommodates the RAN and performs registration management, connection management and mobility management of the UE in the 5G core network. Further, the AMF 6 relays messages between the SMF 7 and the UE 10.

A session management function (SMF) 6 performs management of a protocol data unit (PDU) session, allocation and management of IP addresses to the UE, and selection and control of the UPF 30. The management of the PDU session includes establishment, modification and release of the PDU session. For example, if a policy is changed, change of the PDU session occurs, and change of the QoS or the policy is applied to the UPF 30 through the SMF 7. The PDU session is a virtual communication path to exchange data between the UE 10 and the data network (DN) 40. The DN 40 is a data network (such as a cloud and the Internet) outside the 5G core network.

A policy control function (PCF) 2 provides a policy rule (hereinafter, simply referred to as a policy) to each NF to cause each NF to perform processing complying with the policy rule. The policy includes, for example, rules regarding QoS, filtering, routing or charging. In a case where the policy is registered, changed or deleted, first, the PCF 2 is notified of these, and the PCF 2 performs control of setting, change, deletion, or the like, of the polity for the corresponding UPF 30 through the SMF 6. The PCF 2 is one example of a "first NF".

The UDR 4 stores data to be used at unified data management (UDM), the PCF 2 and the NEF 5 and provides these kinds of data.

The NEF 5 provides a function of safely disclosing capabilities disclosed by the network functions within the 5G system and event information to an external application such as an application function (AF). Further, the NEF 5 provides a function of transferring information from the permitted external application into the network.

The AF is an application server (external server) that provides an auxiliary service other than 5G core specifications.

In the present embodiment, an AF 1 is presented as an example of such a server. The AF 1 transmits/receives information to/from an apparatus within the 5G core network via the NEF 5.

In the present embodiment, the AF 1 is an external application that performs communication control of user equipment (UE) based on information regarding energy to be consumed when the UE performs communication. In the present embodiment, the AF 1 provides a function for optimizing the communication to be performed by the UE based on predetermined energy requirements. Details will be described later. The AF 1 is one example of a "second NF".

An NWDAF 3 provides analytics information within the network. The analytics information within the network to be provided by the NWDAF 3 includes, for example, a communication delay, throughput, jitter and a traffic load level in each section.

Further, in the present embodiment, the NWDAF 3 is configured to be able to collect and provide information regarding energy to be consumed within the network. As one example of the information regarding the energy to be consumed within the network, there is, for example, information regarding an amount of energy (energy consumption, also referred to as EC) to be consumed by network equipment (or network functions) or energy efficiency (also referred to as EE) of the network equipment (or the network functions). The energy consumption may be represented by, for example, an amount of power in watt-hour, joule or the like. The energy efficiency can be, for example, an index indicating how efficient data transfer can be performed. For example, examples of the index can include a value indicating an amount of energy consumed per unit data communication amount. Further, as one example of the information regarding the energy to be consumed within the network, a value indicating a ratio of renewable energy with respect to the consumed energy (renewable energy ratio) can be presented.

An edge application server discovery function (EASDF) relays communication between the UE 10 and a DNS server.

An NRF stores and manages information regarding the NFs (such as, for example, the AMF, the SMF and the UPF) within the 5GC. The NRF can return, in response to an inquiry regarding an NF that is desired to be used, a plurality of candidates for the NF to an inquiry source.

An NSSF has a function of selecting a network slice to be used by a subscriber from network slices generated through network slicing. The network slice is a virtual network having specifications in accordance with applications.

An AUSF provides a function of UE authentication.

A UDM holds subscriber contract information and authentication information for AKA authentication.

In the 5G core network, there is a case where a plurality of NFs of the same type are prepared. For example, there is a case where one NF is prepared for each data center. There is also a case where one NF is shared among the data centers. There is also a case where one data center constitutes a plurality of NFs of the same type. A correspondence relationship between the NFs and the data centers can be set as appropriate.

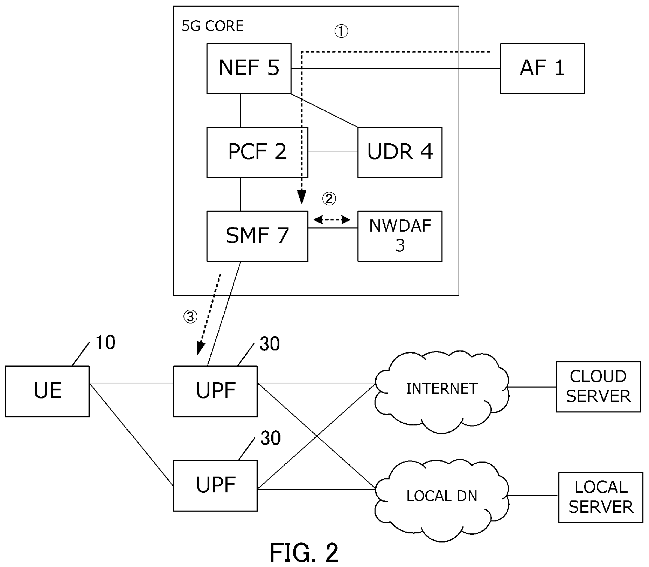

Fig. 2 is a diagram for explaining switching processing of a communication route allocated to the UE 10 in the communication system according to the present embodiment.

The communication system includes the 5G core, the UE 10 and the UPF 30. Fig. 2 illustrates the AF 1, the PCF 2, the NWDAF 3, the UDR 4, the NEF 5 and the SMF 7 in the communication system among the network functions included in the 5G core. However, the network functions included in the communication system are not limited to these. Further, while Fig. 2 illustrates two UPFs 30, the communication system may include three or more UPFs 30.

A local data network (local DN) within the same mobile network as the 5G core is connected to the UPF 30. Further, the Internet that is a wide area network is connected to the UPF 30. A local server such as an edge server may be arranged in the local DN. Further, a cloud server, and the like, may be arranged in the Internet.
(1) First, an update request of the communication route (hereinafter, simply referred to as an update request) for a predetermined user plane (hereinafter, a U-Plane) is transmitted from the AF 1 to the NEF 5. The update request includes energy requirements. The energy requirements are requirements regarding energy, which are preferably satisfied when the UE performs communication. The energy requirements may indicate, for example, thresholds of an amount of energy to be consumed by equipment or functions within the network when the UE performs communication, energy efficiency, a renewable energy ratio, and the like. The update request requests to switch the communication route of user data set for the UE to a route that satisfies the energy requirements.
   The update request is transmitted from the NEF 5 to the PCF 2 via the UDR 4. The PCF 2 that has received the update request notifies the SMF 7 that the update request of the communication route has been issued.
(2) Then, the SMF 7 performs communication with the NWDAF 3 to acquire information regarding energy to be consumed in the network (energy related information) from the NWDAF 3. The SMF 7 may register (subscribe) the energy requirements designated by the AF 1 to the NWDAF 3 and receive the energy related information from the NWDAF 3 at a predetermined timing as information regarding whether the energy requirements are satisfied. Further, the SMF 7 may make an inquiry to the NWDAF 3 at a predetermined timing and acquire the corresponding energy related information from the NWDAF 3.
(3) Then, the SMF 7 performs communication with respective apparatuses (such as, for example, the UPF 30 before route change, the UPF 30 after route change, the AMF 6 and the UE 10) within the network based on the energy related information acquired from the NWDAF 3 and resets the communication route set for the UE 10.

### [Hardware Configuration]

Hardware configurations of the respective apparatuses constituting the system will be described next.

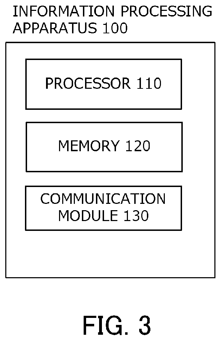

Fig. 3 is a diagram illustrating one example of a hardware configuration of an information processing apparatus operable as each of the network functions including the SMF 7 and an external server.

An information processing apparatus 100 is configured as a computer including a processor (such as a CPU and a GPU), a main memory (such as a RAM and a ROM) and an auxiliary memory (such as an EPROM, a hard disk drive and a removable medium). In the auxiliary memory, an operating system (OS), various kinds of programs, various kinds of tables, and the like, are stored, and each function (software module) that matches a predetermined purpose as will be described later can be implemented by the program stored therein being executed. Further, the information processing apparatus 100 may be an aggregate (cloud) of one or more computers. However, some or all of the functions may be implemented by a hardware circuit such as an ASIC and an FPGA as a hardware module.

The information processing apparatus 100 includes a processor 110, a memory 120 and a communication module 130.

The processor 110 is an arithmetic unit that implements various kinds of functions of the information processing apparatus 100 by executing a predetermined program. The processor 110 can be implemented by, for example, a hardware processor such as a CPU. Further, the processor 110 may include a RAM, a read only memory (ROM), a cache memory, and the like.

The memory 120 is means for storing information and is constituted with a storage medium such as a RAM, a magnetic disk and a flash memory.

The memory 120 may include a main memory and an auxiliary memory. The auxiliary memory stores programs to be executed by the processor 110, data, and the like, to be utilized by the programs. The auxiliary memory is, for example, an erasable programmable ROM (EPROM), a hard disk drive or a solid state drive (SSD). Examples of the programs stored in the auxiliary memory can include, for example, an operating system (OS) and a control program.

The communication module 130 is a communication interface for connecting the information processing apparatus 100 to an external network. The communication module 130, which includes, for example, a network interface card (NIC), an optical network interface, and the like, is configured to be able to communicate with a predetermined network via these.

### [Software Configuration]

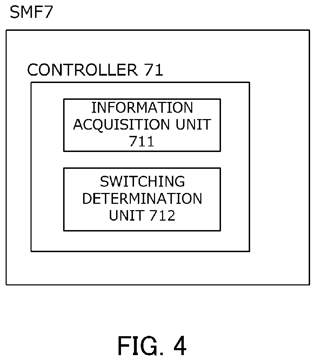

A software configuration of the information processing apparatus 100 will be described next. The information processing apparatus 100 illustrated in Fig. 3 can function as the SMF 7 and the NWDAF 3. Fig. 4 is a diagram schematically illustrating the software configuration in a case where the information processing apparatus 100 functions as the SMF 7.

In the present embodiment, the processor 110 provided in the information processing apparatus 100 functions as a controller 71 of the SMF 7. Further, the controller 71 includes two software modules of an information acquisition unit 711 and a switching determination unit 712. Each software module may be implemented by the processor 110 (such as the CPU) executing the program stored in the memory 120. Note that information processing to be executed by the software modules is synonymous with information processing to be executed by the processor 110 (such as the CPU) .

The information acquisition unit 711 acquires energy related information related to a U-Plane path designated by the AF from the NWDAF 3.

In the present embodiment, the information acquisition unit 711 receives requirements (energy requirements) regarding energy to be consumed in the network from the AF 1 along with the update request. The information acquisition unit 711 acquires analytics information regarding energy consumption on the U-Plane path from the NWDAF 3 based on the information regarding the U-Plane acquired from the AF 1. In the present disclosure, the analytics information regarding the energy consumption provided from the NWDAF 3 will be also referred to as the "energy related information".

Note that the information acquisition unit 711 may be configured to be able to acquire, from the NWDAF 3, for example, analytics information, and the like, regarding network performance other than the energy related information.

The switching determination unit 712 determines whether or not the U-Plane path designated by the AF 1 satisfies the designated energy requirements based on the energy related information acquired from the NWDAF 3. The switching determination unit 712 determines to switch a route of user data in a case where the NFs (such as the UPF) located on the designated U-Plane path include an NF that does not satisfy the designated energy requirements. The switching determination unit 712 may, for example, determine that the energy requirements become satisfied by switching the route of the user data set for the UE from a route that goes through a first UPF 30 to a route that goes through a second UPF 30. The switching determination unit 712 switches the route of the user data by communicating with the related NF or UE.

Note that the switching determination unit 712 may determine whether or not to switch the route of the user data using other information in addition to the energy related information. Examples of such information can include, for example, information regarding network performance (such as, for example, a traffic amount, a packet delay and a packet loss rate) and a score of user experience.

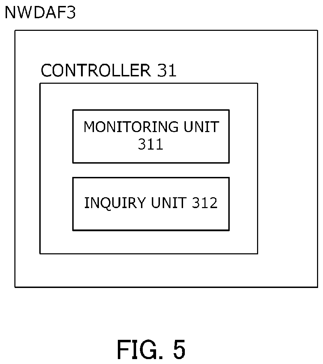

Fig. 5 is a diagram schematically illustrating a software configuration in a case where the information processing apparatus 100 functions as the NWDAF 3.

In the present embodiment, the processor 110 provided in the information processing apparatus 100 functions as a controller 31 of the NWDAF 3. Further, the controller 31 includes two software modules of a monitoring unit 311 and an inquiry unit 312. Each software module may be implemented by the processor 110 (such as the CPU) executing the program stored in the memory 120. Note that information processing to be executed by the software modules is synonymous with information processing to be executed by the processor 110 (such as the CPU).

The NWDAF 3 can provide the energy related information to the SMF 7 in two ways. The monitoring unit 311 receives registration of the energy requirements and generates and provides as appropriate the energy related information in accordance with whether the energy requirements are satisfied. The inquiry unit 312 generates and provides the energy related information in response to each inquiry. The two modules provide substantially the same information while only a trigger of operation is different.

The monitoring unit 311 accepts data that requests subscription registration from the external apparatus. The monitoring unit 311 can accept the subscription registration using, for example, a Nnwdaf_AnalyticsSubscription service. The data that requests the subscription registration (Nnwdaf_AnalyticsSubscription_subscribe) includes energy requirements that should be satisfied on the U-Plane path. The monitoring unit 311 monitors and analyzes the network based on the data and returns an analytics result (Nnwdaf_AnalyticsSubscription_notify) at a predetermined timing. The monitoring unit 311 transmits the analytics result to the external apparatus, for example, in a case where the energy requirements become satisfied on the designated U-Plane path or in a case where the energy requirements are predicted to become satisfied in the future. Note that the analytics result may be transmitted in a case where the energy requirements become unsatisfied or in a case where the energy requirements are predicted to become unsatisfied in the future. In the present embodiment, the analytics result (energy related information) includes three of an amount of energy to be consumed (energy consumption, EC), energy efficiency (EE) and a renewable energy ratio. These values may be actual values or may be predicted values.

For example, in a case where the SMF 7 receives energy requirements requiring that "a use rate of renewable energy be equal to or higher than 50% in network equipment (network functions) located on the designated U-Plane path", the SMF 7 requests the NWDAF 3 (monitoring unit 311) to analyze the use rate of the renewable energy in the related NFs (such as the UPF). For example, in a case where the use rate of the renewable energy in the related NFs falls below or is predicted to fall below 50%, the NWDAF 3 (monitoring unit 311) transmits the analytics result to the SMF 7 as the energy related information.

The NWDAF 3 has a function of providing analytics information (energy related information) each time in response to an information provision request received from the external apparatus in addition to a function of accepting subscription registration from the external apparatus, and in a case where predetermined conditions are satisfied, actively providing analytics information (energy related information) to the external apparatus.

In a case where the information provision request is issued from the external apparatus, the inquiry unit 312 acquires analytics information regarding energy to be consumed by the network equipment (or the network functions) for the designated U-Plane path and provides the analytics information to the external apparatus as the energy related information. The inquiry unit 312 provides the analytics information using, for example, an Nnwdaf_AnalyticsInfo service.

For example, in a case where the SMF 7 receives energy requirements requiring that "the use rate of the renewable energy be equal to or higher than 50% in the NFs on the designated U-Plane path", the SMF 7 requests the NWDAF 3 (inquiry unit 312) to analyze the use rate of the renewable energy in the related NFs. The NWDAF 3 (inquiry unit 312) transmits, to the SMF 7, an analytics result regarding the use rate of the renewable energy in the related NFs as the energy related information.

Note that the inquiry unit 312 and the monitoring unit 311 may be configured to be able to acquire and provide analytics information other than the illustratively presented information. For example, the inquiry unit 312 may be configured to be able to acquire and provide other statistics information regarding energy consumption. Further, the inquiry unit 312 and the monitoring unit 311 may be configured to be able to provide a function of providing other statistics information or analytics information regarding the network, which is standardized by the third generation partnership project (3GPP). Examples of the statistics information (analytics information) can include, for example, information regarding network performance, information regarding network load, analytics information of the UE, information regarding a congestion degree of user data, and information regarding QoS.

Note that the configurations illustrated in Fig. 3 to Fig. 5 are one example, and all or some of the illustrated functions may be implemented by an exclusively designed circuit. Further, the programs may be stored or executed by combinations of the main memory and the auxiliary memory other than the illustrated combination.

### [Processing Flowchart]

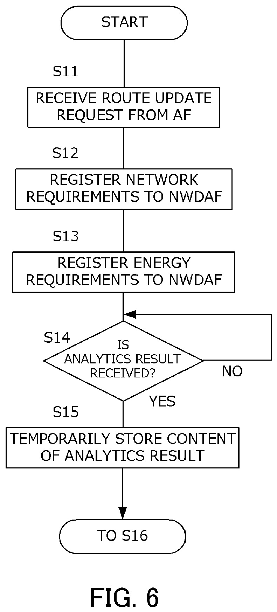

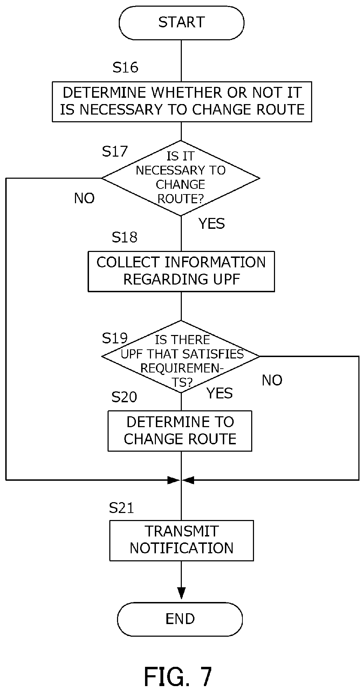

A flowchart of processing to be executed by the SMF 7 will be described next. Fig. 6 and Fig. 7 are flowcharts of the processing to be executed by the SMF 7 in the present embodiment. The processing indicated in Fig. 6 is started in a case where the update request of the communication route is transmitted from the AF 1 via the PCF 2.

First, in step S11, the controller 71 (switching determination unit 712) receives the update request transmitted from the AF 1. The update request is, for example, transmitted from the AF 1 to the SMF 7 via the NEF 5 and the PCF 2. The update request may be, for example, transmitted to the NEF 5 via an API of an Nnef_TrafficInfluence_Create service and may be stored in the UDR 4. Further, the update request may be transmitted from the PCF 2 that has received a notification from the UDR 4 via an API of an Npcf_SMPolicyControl service.

The update request may include data for designating target UE (such as, for example, GPSI or a combination of DNN, S-NSSAI and DNAI). Note that the update request does not have to include designation of the UE. For example, the update request may include information regarding a target U-Plane path.

Further, the update request in the present embodiment includes energy requirements that should be satisfied on the target U-Plane path. As described above, the energy requirements include at least a threshold of one of the amount of the energy to be consumed in equipment (or functions) within the network when the UE performs communication, the energy efficiency or the renewable energy ratio.

Then, the information acquisition unit 711 determines whether or not the designated requirements are satisfied in the network by utilizing a subscription service of network data analysis provided by the NWDAF 3.

First, the controller 71 (information acquisition unit 711) registers (subscribes) requirements regarding network performance (hereinafter, network requirements) to the NWDAF 3 in step S12. The information acquisition unit 711 may register the requirements regarding the network performance to the NWDAF 3 by utilizing an Nnwdaf_AnalyticsSubscription_Subscribe service.

Then, in step S13, the controller 71 (information acquisition unit 711) registers (subscribes) the energy requirements included in the update request to the NWDAF 3. The energy requirements, for example, designate one of the following.
(1) A threshold of an amount of energy to be consumed on the target U-Plane path
(2) A threshold of energy efficiency on the target U-Plane path
(3) A threshold of a ratio of an amount of renewable energy with respect to an amount of energy to be consumed on the target U-Plane path

The information acquisition unit 711 registers an analytics ID unique to the present embodiment (analytics ID allocated to analysis regarding energy) and the energy requirements to the NWDAF 3 by utilizing an Nnwdaf_AnalyticsSubscription_Subscribe service. The energy requirements may be, for example, stored in an Analytics subset.

The analytics result generated by the NWDAF 3 is transmitted to a subscriber (SMF 7) at a predetermined timing. The analytics result may be generated, for example, in a case where the energy requirements and the network requirements are satisfied or predicted to be satisfied. The information acquisition unit 711 receives the analytics result generated by the NWDAF 3 by utilizing an Nnwdaf_AnalyticsSubscription_Notiy service (step S14). The analytics result includes, for example, an analytics ID, an analytics parameter, a timestamp, a valid period, a degree of certainty, meta information, and the like.

In a case where the information acquisition unit 711 does not receive the analytics result from the NWDAF 3, the processing stands by for a predetermined period, and the processing of step S14 is repeated. In a case where the information acquisition unit 711 receives both the analytics result for the energy requirements and the analytics result for the network requirements from the NWDAF 3, the processing transitions to step S15.

The information acquisition unit 711 that has received the analytics result temporarily stores content of the analytics result (step S15).

The SMF 7 that has received the analytics result from the NWDAF 3 determines whether or not the energy requirements received along with the update request are satisfied on the target U-Plane path, and in a case where the energy requirements are not satisfied, executes processing of trying to change the route of the user data. Fig. 7 is a flowchart of the processing.

First, in step S16, the switching determination unit 712 determines whether or not it is necessary to change the route for the designated U-Plane path. In the present step, whether or not the target U-Plane path satisfies the energy requirements is determined by checking the analytics result stored in step S15 against the energy requirements.

For example, a case will be considered where the designated energy requirements require that "the ratio of the renewable energy with respect to the amount of energy to be consumed in the NFs on the route be equal to or higher than 50%".

The switching determination unit 712 determines whether or not the requirements requiring that "the use ratio of the renewable energy be equal to or higher than 50%" are satisfied in the NFs on the designated U-Plane path based on the analytics result acquired from the NWDAF 3.

In the present step, further, the switching determination unit 712 determines whether or not the network requirements are satisfied by checking the analytics result stored in step S15 against the network requirements.

In the present step, in a case where it is determined that the energy requirements or the network requirements are not satisfied, the switching determination unit 712 determines that it is necessary to change the route. In this case (step S17: Yes), the processing transitions to step S18.

In the present step, in a case where it is determined that the energy requirements and the network requirements are satisfied, the switching determination unit 712 determines that it is not necessary to change the route. In this case (step S17: No), the processing transitions to step S21.

In step S18, the switching determination unit 712 collects information regarding the UPFs 30. In the present step, the switching determination unit 712 acquires information regarding the UPFs 30 that constitute the 5G network for the NRF. Further, the switching determination unit 712 acquires energy related information of each UPF by making an inquiry to the NWDAF 3. This enables the switching determination unit 712 to acquire the UPF 30 available by the UE and the corresponding energy related information.

Note that while an illustrative embodiment has been described in the present example in which the NWDAF 3 provides the energy related information, the energy related information may be managed by the NRF.

In step S19, the switching determination unit 712 determines whether or not the UPF 30 that satisfies the energy requirements and the network requirements exists. In a case where the UPF 30 that satisfies the energy requirements and the network requirements exists, the switching determination unit 712 determines to change the set route to a route that goes through the UPF 30 (step S20).

In step S21, the switching determination unit 712 transmits a notification for changing the route to the related NFs (such as, for example, the UPF 30 before route change, the UPF 30 after route change, the AMF 6 and the UE 10).

Note that while in the flowchart in Fig. 7, the SMF 7 determines whether or not it is necessary to change the route based on the network requirements and the energy requirements, the SMF 7 may determine whether or not it is necessary to change the route further based on other requirements. For example, the SMF 7 may determine whether or not it is necessary to change the route based on a score of user experience, and the like, that are separately acquired.

### [One Example of Route Change Processing Sequence]

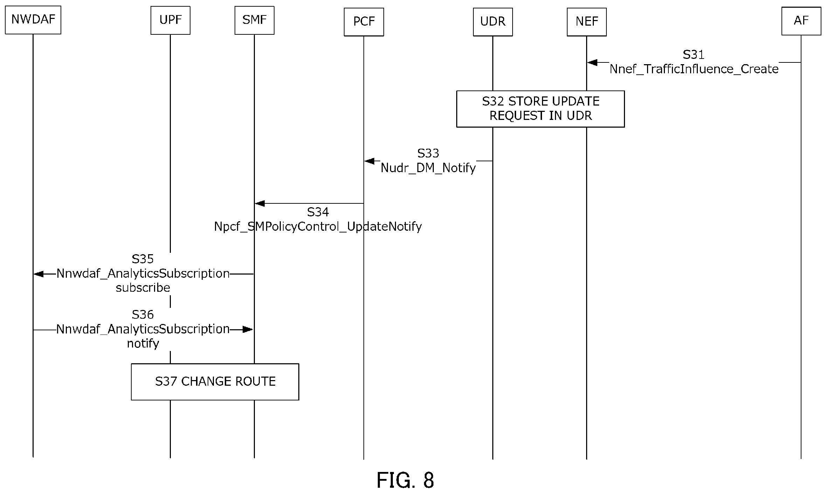

Fig. 8 is one example of a sequence of processing from when the update request of the communication route is transmitted by the AF 1 until when the communication route is changed.

First, in step S31, the AF 1 transmits an Nnef_TrafficInfluence_Create message to the NEF 5. The Nnef_TrafficInfluence_Create message is a message to be utilized for performing traffic control and includes the update request of the communication route. The message includes information related to the target U-Plane path and the energy requirements designated by the AF 1.

Then, in step S32, the NEF 5 stores the update request transmitted by the AF 1 in the UDR 4. The NEF 5 may return this result to the AF 1 using an Nnef_TrafficInfluence_Create_response message.

In a case where the data is stored in step S32, the UDR 4 notifies the PCF 2 that the data is stored using an Nudr_DM_Notify message (step S33). Note that the PCF 2 requires to subscribe a notification of change of data to the UDR 4 in advance.

The PCF 2 determines whether or not update occurs in an existing PDU session based on the message received from the UDR 4. In a case where the message received from the UDR 4 is caused by the update request transmitted from the AF 1, the PCF 2 transmits an Npcf_SMPolicyControl_UpdateNotify message to the SMF 7 (step S34). The SMF 7 can know from the message that update of traffic routing is requested.

In step S35, an Nnwdaf_AnalyticsSubscription_subscribe message is transmitted from the SMF 7 to the NWDAF 3. The message is a message that registers subscription to the NWDAF 3.

In the present embodiment, the message includes information for identifying the NFs (such as the UPF) located on the designated U-Plane path or a base station. Further, the message includes the energy requirements designated by the AF 1.

Note that in the present step, requirements other than the energy requirements, such as the network requirements described above may be registered to the NWDAF 3.

In step S36, an Nnwdaf_AnalyticsSubscription_notify message is transmitted from the NWDAF 3 to the PCF 2. The message includes analytics information (energy related information) for the subscribed conditions. The message is transmitted, for example, in a case where the energy requirements are satisfied under the conditions designated by the Nnwdaf_AnalyticsSubscription_subscribe message or in a case where the energy requirements are predicted to be satisfied in the future.

Further, the message may be transmitted in a case where the energy requirements are not satisfied under the designated conditions or in a case where the energy requirements are predicted to become unsatisfied in the future.

This enables the SMF 7 to identify an NF that satisfies the energy requirements and an NF that does not satisfy the energy requirements among a plurality of NFs related to the designated U-Plane path.

Note that in step S35, in a case where requirements other than the energy requirements are subscribed, the corresponding analytics information may be acquired in step S36.

In step S37, the SMF 7 (switching determination unit 712) executes processing indicated in Fig. 7. If it is determined to change the route through the processing from step S16 to step S20, in step S21, a notification for switching the communication route is transmitted to the related NFs from the SMF 7.

In the present step, the SMF 7 may transmit, to the AMF, information on the UPF to be switched to and routing information of the PDU session. Further, the SMF 7 may transmit, to the UE, information that gives an instruction to set a new route. Still further, the SMF 7 may transmit, to the new UPF 30, Session Modification Request message and make a notification that routing change has occurred.

### (Modification 1 of First Embodiment)

In the flowchart and the sequence described above, the SMF 7 changes the route of the user data without notifying the AF 1.

However, the change of the route of the user data can more than slightly affect the UE by instantaneous interruption of communication, and the like. Thus, before and after the route change occurs, the SMF 7 may notify the AF 1.

In the present modification, the SMF 7 transmits, to the AF 1, a notification (Early Notification) indicating that preparation for route change has been completed. Further, the SMF 7 transmits, to the AF 1, a notification (Late Notification) indicating that the route change has been completed.

Note that in the present modification, the message to be transmitted from the AF 1 in step S31 may include data indicating whether or not the Early Notification and the Late Notification are required.

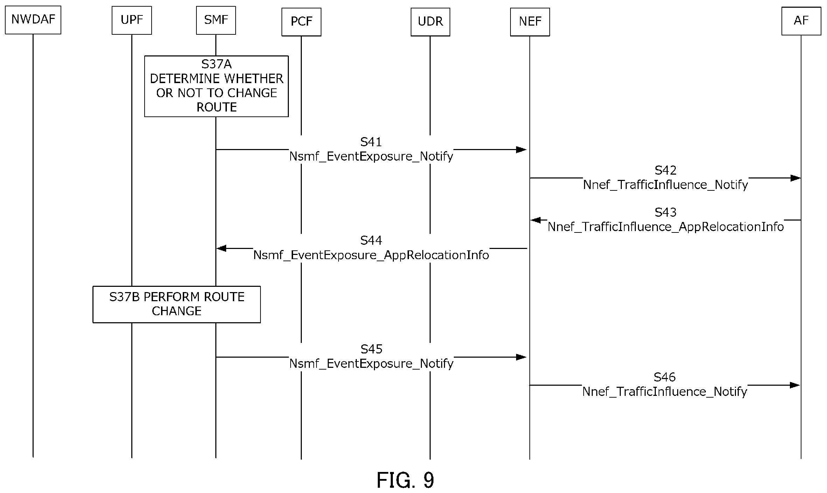

Fig. 9 is one example of a sequence in the present modification. The indicated sequence is executed subsequent to step S36 in Fig. 8. In other words, the indicated sequence is executed at a timing at which the SMF 7 receives the energy related information from the NWDAF 3.

First, in step S37A, the SMF 7 determines whether or not to change the route based on the energy related information received from the NWDAF 3 and the energy requirements received from the AF1. The processing corresponds to step S16 to step S20 in Fig. 7.

If it is determined by the SMF 7 to change the route of the user data, in step S41, an Nsmf_EventExposure_Notify message is transmitted to the NEF 5. The message is a message to be used to transmit an event that has occurred in the 5G network, and in the present embodiment, is used to make a notification that preparation for the route change of the user data has been completed. The message may include a target DNAI of the target PDU session.

The NEF 5 that has received the message transmits an Nnef_TrafficInfluence_Notify message to the AF 1 (step S42). The message is a response to the request transmitted in step S31. The message includes the notification (Early Notification) indicating that preparation for the route change of the user data has been completed. The AF 1 can execute predetermined processing based on the Early Notification before the route change occurs.

In step S43, the AF 1 transmits a response to the Early Notification to the NEF 5 using an Nnef_TrafficInfluence_AppRelocationInfo message. The message may include a positive response or may include a negative response. For example, in a case where it is determined that relocation of an application cannot be normally completed or cannot be completed on time, or the like, the AF 1 may return a negative response.

In step S44, the NEF 5 transmits a response to the Early Notification to the SMF 7 using an Nsmf_EventExposure_AppRelocationInfo message.

In step S37B, the SMF 7 changes the route by executing step S20 in Fig. 7. Note that in a case where a negative response is returned from the AF 1 as the response to the Early Notification, the route change is not performed.

When the route change is completed, the SMF 7 transmits an Nsmf_EventExposure_Notify message to the NEF 5 in a similar manner to step S41 (step S45). The message includes the notification (Late Notification) indicating that the route change of the user data has been completed.

The NEF 5 that has received the message transmits an Nnef_TrafficInfluence_Notify message to the AF 1 (step S46). The message includes the notification (Late Notification) indicating that the route change of the user data has been completed. The AF 1 can recognize that the route change has been completed based on the Late Notification.

As described above, in the first embodiment (and the modification of the first embodiment), the SMF 7 performs route change of the user data based on the energy requirements designated by the AF 1. This makes it possible to dynamically set the route while taking into account requirements regarding energy consumption.

### (Second Embodiment)

In the first embodiment and Modification 1, the AF 1 transmits, to the SMF 7, the update request including the energy requirements. On the other hand, route change processing may be started by the PCF 2 or the SMF 7 uniquely issuing a trigger without using the update request transmitted from the AF 1 as a trigger.

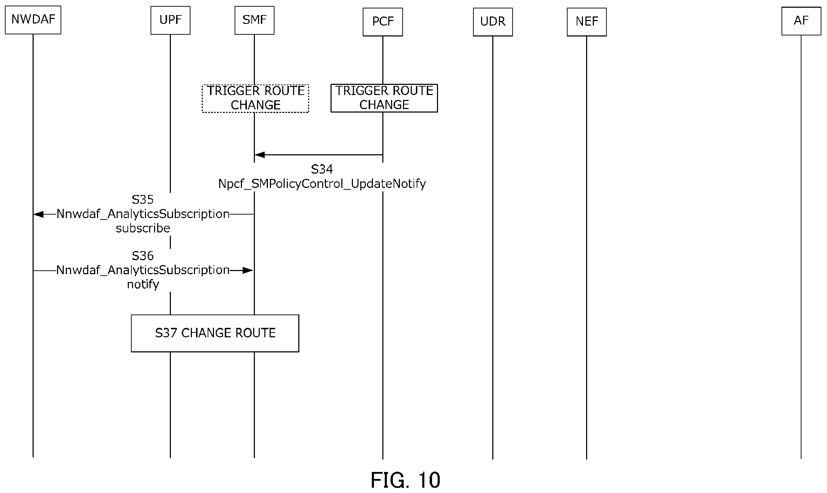

For example, as indicated in Fig. 10, the PCF 2 may trigger start of the route change based on information, and the like, acquired from outside. Alternatively, the SMF 7 may trigger start of the route change based on information, and the like, acquired from outside.

In this case, the PCF 2 and the SMF 7 do not receive the update request, and thus, designation of the energy requirements cannot be received from the AF 1. Thus, the PCF 2 or the SMF 7 may hold the energy requirements in advance and may reset the route of the user data by utilizing the energy requirements.

### (Third Embodiment)

While in the first embodiment, the analytics information is acquired by the SMF 7 with subscription to the NWDAF 3, the analytics information may be acquired by the PCF 2 with subscription to the NWDAF 3.

In this case, the PCF 2 registers the network requirements and the energy requirements to the NWDAF 3 and receives the corresponding analytics information from the NWDAF 3.

In the present embodiment, the PCF 2 executes the processing indicated in Fig. 6 and Fig. 7. In other words, the PCF 2 determines whether or not it is necessary to change the route based on the analytics information acquired from the NWDAF 3 and the energy requirements and the network requirements. If it is determined to change the route, in step S21, the PCF 2 transmits, to the SMF 7, a notification that requests the route change.

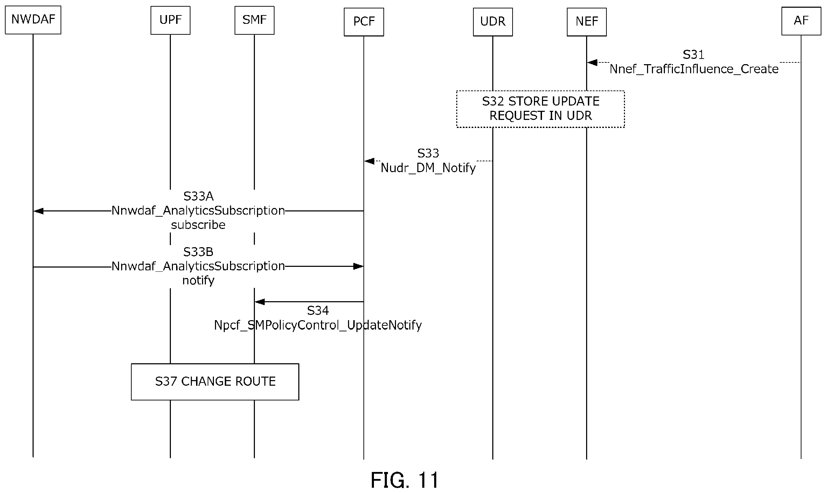

Fig. 11 is one example of a sequence in the present embodiment. While step S33A is similar to step S35 in the first embodiment (Fig. 8), step S33A is different from step S35 in that the message is transmitted by the PCF 2. While step S33B is similar to step S36, step S33B is different from step S36 in that the message is received by the PCF 2. The processing in step S34 and subsequent processing are similar to those in the first embodiment.

### (Fourth Embodiment)

In the first to the third embodiments, the NWDAF 3 acquires the energy related information. However, the energy related information may be provided by a network function other than the NWDAF 3. For example, a new network function (NF) that manages the energy related information may be provided, and energy related information on the designated U-Plane path may be provided by the NF.

Further, the NF that provides the energy related information may be the AF 1. For example, instead of the SMF 7 and the PCF 2 acquiring the energy related information from the NWDAF 3, the SMF 7 and the PCF 2 may issue an inquiry to the AF 1 and the AF 1 may provide the energy related information in response to the inquiry.

### (Modifications)

The above-described embodiments are merely one example, and the present disclosure can be modified and implemented as appropriate within the range not deviating from the gist of the present disclosure.

For example, the processing and the means described in the present disclosure can be freely combined and implemented unless technical inconsistencies arise.

In the first embodiment, the AF 1 designates the energy requirements in advance. However, content of the energy requirements may be updated as needed. For example, in a case where the energy requirements are updated after the AF 1 transmits the Nnef_TrafficInfluence_Create message in step S31, content of the updated energy requirements may be transmitted to the SMF 7 using the Nnef_TrafficInfluence_Update message. The SMF 7 may execute the processing presented as an example again based on the updated energy requirements.

Further, in the first embodiment, the NEF 5 transmits the update request to the PCF 2 via the UDR 4. However, the NEF 5 may directly transmit the update request to the PCF 2. For example, the NEF 5 can directly transmit the update request to the PCF 2 by utilizing an Npcf_Policy Authorization_Create message.

Further, in a case where it is not appropriate to change the communication route such as a case where a communication route that satisfies the energy requirements does not exist, the PCF 2 may notify the AF 1 of a reason thereof. The notification may be transmitted as a response to the update request.

Furthermore, the processes described as being performed by one device may be shared and executed by a plurality of devices. Alternatively, the processes described as being performed by different devices may be performed by a single device. In a computer system, the hardware configuration (server configuration) by which each function is realized can be flexibly changed.

The present disclosure can also be realized by supplying a computer program implementing the functions described in the above embodiments to a computer, and having one or more processors of the computer read and execute the program. Such a computer program may be provided to the computer by a non-transitory computer-readable storage medium connectable to the system bus of the computer, or may be provided to the computer via a network. Non-transitory computer-readable storage media include, for example, any type of disk, such as a magnetic disk (e.g., a floppy disk, a hard disk drive (HDD), etc.), an optical disk (e.g., a CD-ROM, a DVD disk, a Blu-ray disk, etc.), a read-only memory (ROM), a random-access memory (RAM), an EPROM, an EEPROM, a magnetic card, a flash memory, an optical card, or any type of medium suitable for storing electronic instructions.

## Claims

1. An information processing method comprising:
a first network function, NF, (2,7) within a core network executing:
in a case where the first NF (2,7) receives a request regarding route setting in accordance with energy related to communication within the core network from a second NF (1), acquiring energy related information regarding the energy related to the communication; and
determining whether to change or not a communication route set for a predetermined user equipment based at least on the energy related information.

2. The information processing method according to claim 1, wherein the first NF (2,7) performs change of the communication route set for the user equipment in a case where the first NF (2,7) determines to change the communication route.

3. The information processing method according to claim 1 or 2, wherein the first NF (2,7) acquires the energy related information from a network data analytics function (NWDAF) (3).

4. The information processing method according to claim 1 or 2, wherein the first NF (2,7) acquires the energy related information from the second NF (1).

5. The information processing method according to any one of claims 1 to 4, wherein the first NF (2,7) determines to change the communication route in a case where the energy related information satisfies a predetermined requirement.

6. The information processing method according to any one of claims 1 to 5, wherein the energy related information includes information regarding at least one of energy consumption, energy efficiency or a renewable energy ratio.

7. The information processing method according to claim 1, wherein in a case where the first NF (2,7) determines not to change the communication route, the first NF (2,7) notifies the second NF (1) of a reason of the determination.

8. The information processing method according to any one of claims 1 to 6, wherein
the request includes a predetermined energy requirement, and
the first NF (2,7) determines to change the communication route in a case where the energy related information satisfies the predetermined energy requirement.

9. The information processing method according to any one of claims 1 to 6, wherein
in a case where the first NF (2,7) determines to change the communication route, the first NF (2,7) transmits, to the second NF (1), a confirmation as to whether or not it is possible to change the communication route, and
in a case where the first NF (2,7) receives a response indicating permission of change of the communication route, the first NF (2,7) performs change of the communication route.

10. The information processing method according to any one of claims 1 to 6, wherein in a case where the first NF (2,7) performs change of the communication route, the first NF (2,7) transmits, to the second NF (1), a result of the change of the communication route.

11. An information processing apparatus that operates as a first network function (NF) (2,7) within a core network, the information processing apparatus comprising:
a controller (110,71) configured to execute:
in a case where the controller (110,71) receives a request regarding route setting in accordance with energy related to communication within the core network from a second NF (1), acquiring energy related information regarding the energy related to the communication; and
determining whether to change or not a communication route set for predetermined user equipment based at least on the energy related information.

12. The information processing apparatus according to claim 11, wherein the controller (110,71) performs change of the communication route set for the user equipment in a case where the controller (110,71) determines to change the communication route.

13. The information processing apparatus according to claim 11 or 12, wherein the controller (110,71) acquires the energy related information from a network data analytics function (NWDAF) (3).

14. The information processing apparatus according to claim 11 or 12, wherein the controller (110,71) acquires the energy related information from the second NF (1).

15. A non-transitory computer readable storing medium recording a computer program for causing a computer to perform an information processing method according to any one of claims 1 to 10.
